# EUROPÄISCHE PATENTSCHRIFT

(11) **EP 1 608 526 B1**
(45) Veröffentlichungstag und Bekanntmachung des Hinweises auf die Patenterteilung: **21.11.2012**
(21) Anmeldenummer: 04722178.3
(22) Anmeldetag: 20.03.2004
(51) Int. Cl.: E02F 9/22, F04B 17/00, F04B 49/20

(54) **ANTRIEBSSTRANG ZUM ANTRIEB EINES MOBIL-FAHRZEUGS**
ENGINE ASSEMBLY FOR DRIVING A MOTOR VEHICLE
ENSEMBLE MOTEUR POUR L'ENTRAINEMENT D'UN VEHICULE AUTOMOBILE

(30) Priorität: 28.03.2003 DE 10314329
(43) Veröffentlichungstag der Anmeldung: 28.12.2005
(73) Patentinhaber: ZF Friedrichshafen AG, 88038 Friedrichshafen (DE)
(72) Erfinder: LEGNER, Jürgen, 88048 Friedrichshafen (DE); REBHOLZ, Wolfgang, 88045 Friedrichshafen (DE)
(86) Internationale Anmeldenummer: PCT/EP2004/002945
(87) Internationale Veröffentlichungsnummer: WO 2004/085193

(56) Entgegenhaltungen:
- EP-A- 0 539 589
- US-A- 4 173 152
- US-A- 6 010 309
- US-B1- 6 173 513
- PATENT ABSTRACTS OF JAPAN Bd. 016, Nr. 191 (M-1245), 8. Mai 1992 (1992-05-08) -& JP 04 027784 A (HITACHI CONSTR MACH CO LTD), 30. Januar 1992 (1992-01-30)
- PATENT ABSTRACTS OF JAPAN Bd. 1999, Nr. 10, 31. August 1999 (1999-08-31) -& JP 11 132154 A (KOMATSU LTD), 18. Mai 1999 (1999-05-18)
- PATENT ABSTRACTS OF JAPAN Bd. 1996, Nr. 10, 31. Oktober 1996 (1996-10-31) -& JP 08 142704 A (MITSUBISHI MOTORS CORP), 4. Juni 1996 (1996-06-04)
- PATENT ABSTRACTS OF JAPAN Bd. 016, Nr. 141 (M-1232), 9. April 1992 (1992-04-09) -& JP 04 001434 A (KOBE STEEL LTD), 6. Januar 1992 (1992-01-06)
- PATENT ABSTRACTS OF JAPAN Bd. 1996, Nr. 08, 30. August 1996 (1996-08-30) -& JP 08 104147 A (SEIREI IND CO LTD; YANMAR AGRICULT EQUIP CO LTD), 23. April 1996 (1996-04-23)

## Beschreibung

Die Erfindung bezieht sich auf einen Antriebsstrang zum Antrieb eines Mobil-Fahrzeugs nach der im Oberbegriff von Anspruch 1 näher definierten Art. JP08 - 104147 offenbart den Oberbegriff des Anspruchs 1.

Gattungsgemäße Antriebsstränge werden vorzugsweise in Arbeitsmaschinen, wie beispielsweise Radlader oder Grader, verwendet, bei welchen eine Antriebsmaschine, insbesondere ein Dieselmotor, mit dem Pumpenlaufrad eines hydrodynamischen Wandlers verbunden ist, dessen Turbinenwelle den Antrieb für ein schaltbares Getriebe bildet, welches mit Antriebsrädern in Verbindung steht. Ein Nebenabtrieb zum Antrieb mindestens einer Hydraulikpumpe, insbesondere für die Arbeitshydraulik der Arbeitsmaschine, steht ebenfalls mit der Antriebsmaschine in Verbindung und ist vorzugsweise mit der Antriebswelle des hydrodynamischen Wandlers verbunden. Die Antriebsmaschine und der hydrodynamische Wandler sind dergestalt ausgelegt, dass im Festbremspunkt, d. h. bei stehendem Fahrzeug unter Vollast und nicht betätigter Arbeitshydraulik, der. Dieselmotor sich bei Nenndrehzahl befindet. Dies ist notwendig, um im Festbremspunkt die Arbeitshydraulik betätigen zu können,-ohne dass dabei der Dieselmotor unterhalb einer benötigten Mindestdrehzahl gedrückt wird und somit dieser stillsteht. In den meisten Fahrzuständen jedoch ist der Dieselmotor in seiner Größe überdimensioniert, was die Herstellkosten des Fahrzeugs negativ beeinflußt.

Die DE 195 21 458 A1 offenbart eine elektrohydraulische Steuervorrichtung für den Antrieb einer Maschine, bei welcher zwischen dem Dieselmotor und dem hydrodynamischen Wandler eine Kupplung angeordnet ist, welche immer dann im Öffnungssinne betätigbar ist, wenn das Fahrzeug eine geringe Fahrgeschwindigkeit aufweist, jedoch ausreichend Volumenstrom für die Arbeitshydraulik zur Verfügung stehen soll.

Der vorliegenden Erfindung liegt die Aufgabe zugrunde, einen Antriebsstrang zum Antrieb eines Mobil-Fahrzeugs, insbesondere einer Arbeitsmaschine, zu schaffen, bei welcher eine kostengünstige Antriebsmaschine verwendet werden kann und ausreichend Volumenstrom für die Arbeitshydraulik zur Verfügung steht.

Die Aufgabe wird mit einem, auch die kennzeichnenden Merkmale des Hauptanspruchs aufweisenden, gattungsgemäßen Antriebsstrang zum Antrieb eines Mobil-Fahrzeugs gelöst.

Erfindungsgemäß wird eine kleinere Antriebsmaschine, vorzugsweise ein Dieselmotor, verwendet, welcher mit dem hydrodynamischen Wandler so ausgelegt ist, dass der Antriebsmotor im Festbremspunkt ohne Betätigen der Arbeitshydraulik sich nahe zu seinem maximalen Drehmoment befindet. Indem der Antriebsmotor durch seine Auslegung auch im Teillastbereich niedrigere Drehzahlen aufweist, wird der Nebenabtrieb, und somit die Pumpe der Arbeitshydraulik, auch im Teillastbereich mit geringeren Drehzahlen angetrieben. Um dies zu kompensieren, wird entweder eine hydraulische Pumpe mit größerem Fördervolumen oder eine größere Übersetzung zwischen der hydraulischen Pumpe und der Antriebsmaschine verwendet. Somit ist gewährleistet, dass im Teillastbereich die Arbeitshydraulik ausreichend Fördermenge liefert. Befindet sich die Antriebsmaschine im Vollastbetrieb und die Antriebsmaschinendrehzahl wird aufgrund erhöhtem Fahrwiderstand unterhalb einer definierten Drehzahl gedrückt, so wird bei Verwendung einer großvolumigen, verstellbaren Hydraulikpumpe der Arbeitshydraulik diese auf geringeres Fördervolumen oder bei Verwendung einer Übersetzung zwischen der hydraulischen Pumpe der Arbeitshydraulik und der Antriebsmaschine diese auf höhere Übersetzung verstellt, so dass sich die Drehzahl an der hydraulischen Pumpe erniedrigt und somit die Aufnahmeleistung der hydraulischen Pumpe verringert wird, wodurch die Antriebsmaschine nicht unzulässig stark gedrückt werden kann. Vorzugsweise ist die Übersetzung zwischen der hydraulischen Pumpe und der Antriebsmaschine stufenlos verstellbar, es besteht jedoch auch die Möglichkeit, die Übersetzung in verschiedenen Schaltstufen auszuführen. Bei Verwendung einer verstellbaren hydraulischen Pumpe ist diese Pumpe vorzugsweise stufenlos verstellbar, es besteht jedoch auch die Möglichkeit, die hydraulische Pumpe mit mindestens zwei ansteuerbaren Schluckvolumen auszugestalten. Ebenso besteht die Möglichkeit, mehrere hydraulische Pumpen zu verwenden, wobei in Abhängigkeit der Dieselmotordrehzahl eine oder mehrere Pumpen abgeschaltet werden können, wodurch der Volumenstrom ebenfalls verringert wird.

Somit ist gewährleistet, dass im Teillastbereich ausreichend Fördermenge der hydraulischen Pumpe für die Arbeitshydraulik zur Verfügung steht, ohne dass der in seiner Auslegung kleinere Antriebsmotor zu stark gedrückt wird.

In einer weiteren Ausgestaltungsform kann zwischen der Antriebsmaschine und dem hydrodynamischen Wandler eine Kupplung angeordnet sein. Befindet sich beispielsweise der Radlader bei sehr geringer Fahrgeschwindigkeit oder sogar im Stillstand und die Arbeitshydraulik wird betätigt, so besteht die Möglichkeit, diese Kupplung im Öffnungssinne so weit zu betätigen, dass eine gewünschte Fahrgeschwindigkeit nicht überschritten wird, jedoch bei der Arbeitshydraulik ausreichend Fördermenge zur Verfügung steht, da sich durch das Öffnen dieser Kupplung die Antriebsmotordrehzahl erhöht und weniger Leistung in den Fahrantrieb fließt. Ebenso kann diese Kupplung dazu verwendet werden, die Antriebsmaschine vor zu starker Drückung zu schützen, indem die Kupplung immer dann im Öffnungssinne betätigt wird, wenn die Antriebsmaschine durch den Fahrantrieb und die Arbeitshydraulik unterhalb eines zulässigen Drehzahlniveaus gedrückt wird, um den Betrieb der Antriebsmaschine aufrechtzuerhalten. Vorzugsweise wird die Kupplung zwischen der Antriebsmaschine und dem hydrodynamischen Wandler und die Übersetzung zwischen der Antriebsmaschine und der hydraulischen Pumpe der Arbeitshydraulik oder das Fördervolumen der hydraulischen Pumpe der Arbeitshydraulik in Abhängigkeit der gewünschten Fahrgeschwindigkeit des Lastzustands der Antriebsmaschine und einer Anforderung der Arbeitshydraulik gesteuert oder geregelt.

Weitere Merkmale sind der Figuren-Beschreibung zu entnehmen.

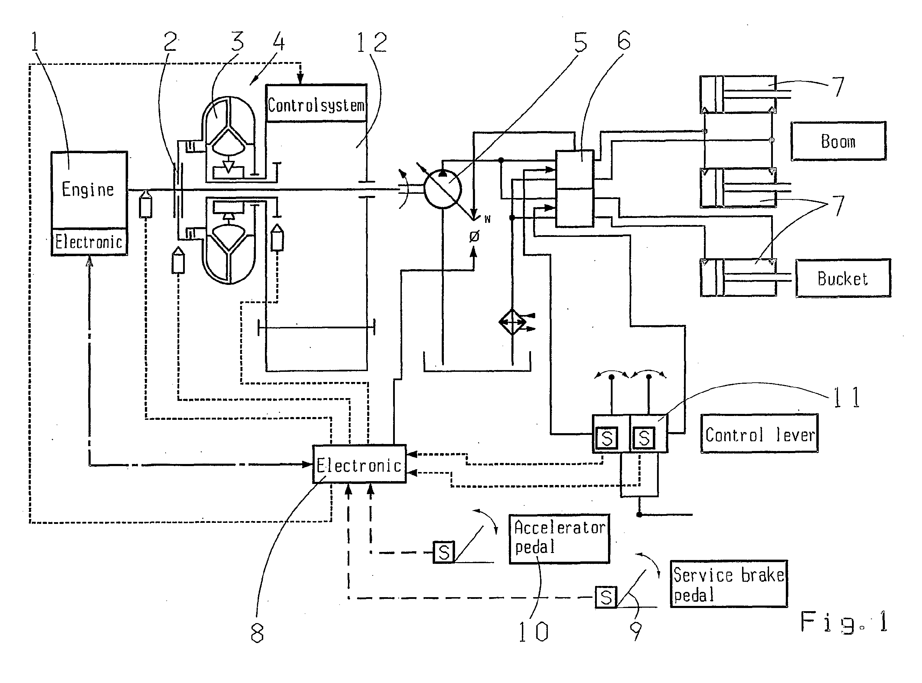

Die einzige Figur zeigt eine Antriebsmaschine 1, deren Abtriebswelle über eine Primärkupplung 2 ein Pumpenrad 3 eines hydrodynamischen Wandlers 4 antreibt. Ebenso ist die Antriebsmaschine 1 mit einer Hydraulikpumpe 5 der Arbeitshydraulik verbunden. Die Hydraulikpumpe 5 kann mit dem Antrieb der Primärkupplung 2 verbunden sein. Die Hydraulikpumpe 5 ist vorzugsweise eine Load-Sensing-Pumpe. Die Fördermenge der Hydraulikpumpe 5 wird über ein Ventil 6 zu Verbrauchern 7, wie beispielsweise die Schaufel eines Radladers, gefördert. Eine elektronische Steuereinheit 8 verarbeitet Signale, welche aus Sensoren in einem Bremspedal, einem Fahrgeschwindigkeitspedal 10, Steuerhebel für die Arbeitshydraulik 11, dem Lastzustand der Antriebsmaschine 1 sowie deren Drehzahl und der Drehzahl des Pumpenrades 3 sowie der Eingangsdrehzahl im Schaltgetriebe 12 stammen. In Abhängigkeit dieser Parameter steuert die elektronische Steuereinheit bei einer größeren, in ihrem Fördervolumen verstellbaren Hydraulikpumpe 5 das Fördervolumen oder bei einer nicht gezeigten verstellbaren Übersetzung zwischen der hydraulischen Pumpe 5 und der Antriebsmaschine 1 diese Übersetzung. Befindet sich beispielsweise die Antriebsmaschine 1 im Teillastbereich und die elektronische Steuereinheit erkennt durch Betätigen der Steuerhebel 11 die Anforderung von Volumenstrom der hydraulischen Pumpe 5, so wird der Volumenstrom der hydraulischen Pumpe 5 entweder durch Verstellen der hydraulischen Pumpe 5 oder durch Verstellen der Übersetzung zwischen der hydraulischen Pumpe 5 und der Antriebsmaschine 1 erhöht. Erkennt beispielsweise die elektronische Steuereinheit 8 aus der Stellung des Fahrgeschwindigkeitspedals 10, dass das Fahrzeug eine geringe Geschwindigkeit oder sogar Stillstand aufweisen soll, und durch den Steuerhebel 11, dass Volumenstrom von der hydraulischen Pumpe 5 gefördert wird, so wird die Primärkupplung 2 im Öffnungssinne betätigt und in Abhängigkeit vom Lastzustand der Antriebsmaschine 1 die hydraulische Pumpe 5 in ihrem Fördervolumen oder das Übersetzungsgetriebe zwischen der Antriebsmaschine 1 und der hydraulischen Pumpe 5 verstellt, so dass der Volumenstrom der hydraulischen Pumpe 5 sich erhöht, ohne dass die Fahrgeschwindigkeit ebenfalls erhöht wird. Erkennt jedoch die elektronische Steuereinheit 8 aus dem Fahrgeschwindigkeitspedal 10, dass das Fahrzeug eine erhöhte Geschwindigkeit aufweist und die Antriebsmaschine 1 sich im Teillastbereich befindet, und aus dem Steuerhebel 11, dass Volumenstrom für die Arbeitshydraulik benötigt wird, so wird die hydraulische Pumpe 5 in ihrem Fördervolumen in Richtung höheres Fördervolumen verstellt, oder die Übersetzung zwischen der hydraulischen Pumpe 5 und der Antriebsmaschine 1 ebenfalls so verstellt, dass die hydraulische Pumpe 5 ein größeres Fördervolumen liefert. Der Volumenstrom der hydraulischen Pumpe 5 oder die Übersetzung des Übersetzungsgetriebes zwischen der hydraulischen Pumpe 5 und der Antriebsmaschine 1 wird jedoch nur so weit verstellt, dass die Antriebsmaschine 1 nicht unter ein definiertes Drehzahlniveau sinkt.

Somit ist es möglich, einen Antriebsstrang zum Antrieb eines Mobil-Fahrzeugs zu schaffen, bei welchem die hydraulische Pumpe 5 ausreichend Förderström liefert, jedoch die Antriebsmaschine 1 eine geringere Baugröße aufweisen kann.

### Bezugszeichen

- 1: Antriebsmaschine
- 2: Primärkupplung
- 3: Pumpenrad
- 4: hydrodynamischer Wandler
- 5: Hydraulikpumpe
- 6: Ventil
- 7: Verbraucher
- 8: elektronische Steuereinheit
- 9: Bremspedal
- 10: Fahrgeschwindigkeitspedal
- 11: Steuerhebel
- 12: Schaltgetriebe

## Patentansprüche

1. Antriebsstrang zum Antrieb eines Mobil-Fahrzeugs mit einer Antriebsmaschine (1), welche einerseits ein schaltbares Untersetzungsgetriebe (12) zum Antrieb eines Fahrantriebs und andererseits einen Nebenabtrieb zum Antrieb mindestens einer Hydraulikpumpe (5) antreibt, wobei zwischen dem Nebenabtrieb und der Antriebsmaschine (1) ein Obersetzungsgetriebe vorgeschaltet angeordnet ist, und die Übersetzung des Übersetzungsgetriebes stufenlos verstellbar oder schaltbar in Schaltstufen ausgeführt ist, wobei das Übersetzungsgetriebe in Abhängigkeit einer benötigten Fördermenge der Hydraulikpumpe (5) und in Abhängigkeit der Drehzahl und eines Lastzustands der Antriebsmaschine (1) die Übersetzung einstellt, wobei im Vollastbetrieb der Antriebsmaschine (1) unterhalb einer definierten Drehzahl der Antriebsmaschine (1) das Übersetzungsgetriebe auf höhere Übersetzung verstellt wird, so dass sich die Antriebsdrehzahl der hydraulischen Pumpe (5) erniedrigt.

2. Antriebsstrang nach Anspruch 1, **dadurch gekennzeichnet, dass** das Untersetzungsgetriebe stufenlos einstellbar ist.

3. Antriebsstrang nach Anspruch 1, **dadurch gekennzeichnet, dass** im Teillastbetrieb der Antriebsmaschine (1) unterhalb einer definierten Drehzahl der Antriebsmaschine (1) das Übersetzungsgetriebe auf kleinere Übersetzung verstellt wird, so dass sich die Antriebsdrehzahl der hydraulischen Pumpe (5) erhöht.

## Claims

1. Drive train for driving a mobile vehicle having a drive machine (1) which drives firstly a shiftable step-down gearbox (12) for driving a traction drive and secondly a power take-off for driving at least one hydraulic pump (5), a step-up gearbox being arranged such that it is connected upstream between the power take-off and the drive machine (1), and the transmission ratio of the step-up gearbox being configured such that it can be adjusted in an infinitely variable manner or can be shifted in shifting stages, the step-up gearbox setting the transmission ratio as a function of a required delivery quantity of the hydraulic pump (5) and as a function of the rotational speed and a load state of the drive machine (1), the step-up gearbox being adjusted to a higher transmission ratio below a defined rotational speed of the drive machine (1) during the full-load operating mode of the drive machine (1), with the result that the drive speed of the hydraulic pump (5) is lowered.

2. Drive train according to Claim 1, **characterized in that** the step-down gearbox can be set in an infinitely variable manner.

3. Drive train according to Claim 1, **characterized in that** the step-up gearbox is adjusted to a lower transmission ratio below a defined rotational speed of the drive machine (1) during the part-load operating mode of the drive machine (1), with the result that the drive speed of the hydraulic pump (5) is increased.

## Revendications

1. Chaîne cinématique pour l'entraînement d'un véhicule mobile comprenant une machine motrice (1), qui entraîne d'une part un engrenage réducteur commutable (12) pour l'entraînement d'un entraînement de conduite et d'autre part une prise de force auxiliaire pour l'entraînement d'au moins une pompe hydraulique (5), un engrenage multiplicateur étant prévu entre la prise de force auxiliaire et la machine motrice (1), et la transmission de l'engrenage multiplicateur étant effectuée de manière commutable ou réglable en continu en étages de commutation, l'engrenage multiplicateur ajustant la multiplication en fonction d'une quantité de refoulement requise de la pompe hydraulique (5) et en fonction du régime et de l'état de charge de la machine motrice (1), l'engrenage multiplicateur étant réglé à une multiplication supérieure en mode de pleine charge de la machine motrice (1) en dessous d'un régime défini de la machine motrice (1), de telle sorte que le régime d'entraînement de la pompe hydraulique (5) soit réduit.

2. Chaîne cinématique selon la revendication 1, **caractérisée en ce que** l'engrenage réducteur peut être ajusté en continu.

3. Chambre de combustion selon la revendication 1, **caractérisée en ce qu'**en mode de charge partielle de la machine motrice (1) en dessous d'un régime défini de la machine motrice (1), l'engrenage multiplicateur est réglé à une multiplication inférieure, de sorte que le régime d'entraînement de la pompe hydraulique (5) soit augmenté.
